# EUROPEAN PATENT APPLICATION

(11) **EP 4 769 739 A1**
(43) Date of publication of application: **01.07.2026**
(21) Application number: 25768520.6
(22) Date of filing: 18.02.2025
(51) Int. Cl.: H01M 50/289, H01M 10/658, H01M 50/271, H01M 50/204

(54) **BATTERY PACK AND TRANSPORTATION MEANS**

(30) Priority: 08.03.2024 KR 20240033014
(71) Applicant: LG Energy Solution, Ltd., Seoul 07335 (KR)
(72) Inventor: UHM, Jae Yong, Daejeon 34122 (KR)
(74) Representative: Plasseraud IP
(86) International application number: PCT/KR2025/002344
(87) International publication number: WO 2025/187996

(57) **Abstract**

A battery pack capable of delaying thermal propagation between battery modules and a vehicle capable of improving thermal stability according to the present disclosure may comprise: a plurality of battery modules; a pack case accommodating the battery modules; a partition wall disposed between the battery modules; and a refractory member disposed on the partition wall.

## Description

### [Technical Field]

The present disclosure claims the benefit of the priority date of Patent Application No. 10-2024-0033014 filed in the Korean Intellectual Property Office on March 8, 2024.

The present disclosure relates to a battery pack.

The present disclosure relates to a vehicle.

### [Background Art]

The battery cell may be a basic unit of a battery. The battery cell may store electric energy as chemical energy, and release it when necessary. In addition, the battery cell may exist in various forms such as a cylindrical shape, a prismatic shape, a pouch shape, etc.

The battery module may be a combination of several battery cells. The battery module can protect and efficiently manage the battery cell. Moreover, the battery module may comprise a circuit connecting the battery cell and a cooling system, or the like, therein.

The battery pack may be a combination of several battery modules. The battery pack can be applied in various fields, such as electric car, energy storage system (ESS), or the like. Furthermore, the battery pack may comprise system protecting and managing the modules (BMS, cooling system, or the like) therein.

Thermal Runaway may mean a phenomenon in which the internal temperature of the battery rapidly increases, leading to explosion. Thermal Runaway may occur when mechanical, electrical, or thermal abnormalities occur. When Thermal Runaway occurs in the battery cell, flame and discharges may be released to propagate heat to the adjacent battery cell and battery module. This diffusion may be accelerated through the electrode leads.

When refractory paint is exposed to the flame, it may expand and be converted to char to form an insulating layer. The insulating layer can protect the adherend from the flame and heat.

### [Disclosure]

### [Technical Problem]

The present disclosure is intended to provide a battery pack capable of delaying thermal propagation between battery modules.

The present disclosure is intended to provide a vehicle capable of improving thermal stability.

### [Technical Solution]

An embodiment of the present disclosure is a battery pack comprising: a plurality of battery modules; a pack case accommodating the battery modules; a partition wall disposed between the battery modules; and a refractory member disposed on the partition wall.

The refractory member may comprise a foamable refractory material.

The partition wall may comprise: a first wall, and a second wall disposed between a bottom surface portion of the pack case and the first wall.

The refractory member may be disposed around a connection portion of the first wall and the second wall.

The first wall may form an upper cover of the partition wall.

The partition wall may comprise an empty space formed by the first wall and the second wall.

The first wall may comprise: an inclined portion, and a non-inclined portion, and the inclined portion may be inclined toward the battery module between the second wall and the non-inclined portion.

The refractory member may be disposed on the inclined portion and the second wall.

The partition wall may further comprise: pores disposed between the partition wall and the refractory member.

Each of the battery modules may comprise: a plurality of battery cells arranged in a width direction, and a module case accomodating the battery cells, and each of the battery cells may comprise electrode leads withdrawn in a length direction.

The module case may be opened in a length direction, and the battery module may further comprise end plates closing the module case.

The end plates may comprise an opening, and the opening may be disposed apart from the bottom surface portion of the pack case.

The refractory member may be disposed at a position of the partition wall corresponding to the opening.

The partition wall may be disposed between an end plate disposed at one end of one battery module and an end plate disposed at another end of another battery module disposed adjacent to the one end of the battery module.

A height of the partition wall may be greater than a height of the battery module.

The partition wall may be disposed apart from the battery module.

The battery pack may further comprise: a side wall disposed between the battery modules, wherein the partition wall may be disposed between the battery modules disposed in a length direction, and the side wall may be disposed between the battery modules disposed in a width direction.

The refractory member may be disposed on the partition wall and the side wall.

Another embodiment of the present disclosure is a vehicle comprising: a body part; and a power supplying part, wherein the power supplying part comprises a battery pack, and the battery pack comprises: a plurality of battery modules; a pack case accommodating the battery modules; a partition wall disposed between the battery modules; and a refractory member disposed on the partition wall.

### [Advantageous Effects]

A battery pack of the present disclosure is capable of delaying thermal propagation between battery modules.

A vehicle of the present disclosure is capable of improving thermal stability.

### [Description of Drawings]

Fig. 1 is a flat cross-sectional view of a battery pack of an embodiment.
Fig. 2 is a perspective view of a partition wall of an embodiment.
Fig. 3 is a side cross-sectional view of a partition wall of an embodiment.
Fig. 4 is a partially enlarged view of a partition wall of an embodiment.
Fig. 5 is an exploded perspective view of a battery module of an embodiment.
Fig. 6 is a partially enlarged view of a battery module of an embodiment.
Fig. 7 is a side cross-sectional view of a battery pack of an embodiment.
Fig. 8 is a side cross-sectional view of a battery pack of an embodiment.
Fig. 9 is a flat cross-sectional view of a battery pack of an embodiment.
Fig. 10 is a schematic view of a vehicle of an embodiment.

### [Description of Main Reference Numerals of Drawings]

1: Battery pack
10: Battery ,odule
11: Cell assembly
111: Battery cell
1111, 1113: Electrode lead
12: Module case
13: Busbar assembly
131: Connecting busbar 133: Terminal busbar
14: End plate
141: Terminal opening 143: Connector opening
15: Insulating cover
16: Connector
20: Pack case
21: Bottom surface portion
30: Partition wall
31: First wall 33: Second wall 35: Pore(s)
40: Refractory member
50: Side wall
V: Vehicle

### [Best Mode]

Hereinafter, the present disclosure will be described in detail with reference to the accompanying drawings. However, this explanation is merely an example. The scope of the present disclosure is not limited to the specific embodiments described by way of example.

An embodiment of the present disclosure is a battery pack 1.

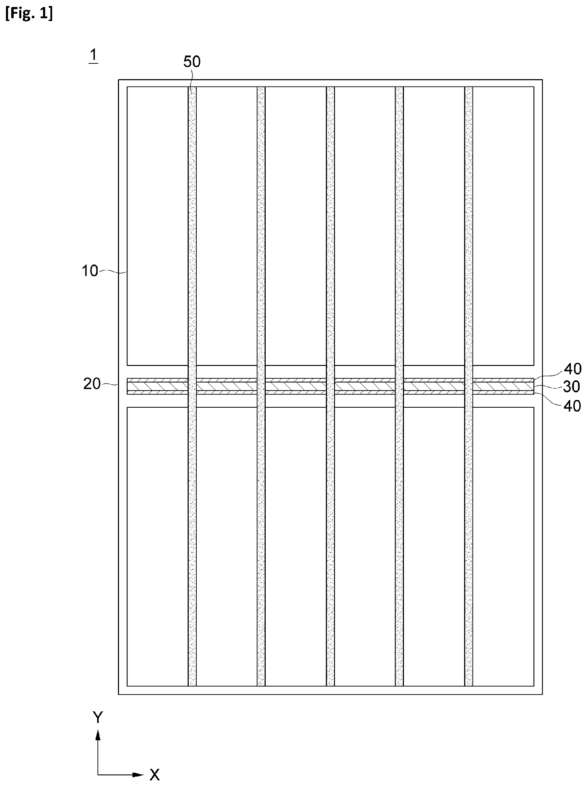

Fig. 1 is a flat cross-sectional view of a battery pack 1 of an embodiment.

Referring to Fig. 1, the battery pack 1 may comprise a plurality of battery modules 10, a pack case 20, a partition wall 30, and a refractory member 40.

The battery module 10 may be a combination of several battery cells 111. The battery cell 111 may be a basic unit of a battery. The battery cell 111 may store electrical energy as chemical energy and release it when necessary. In addition, the battery cell 111 may exist in various shapes such as a cylindrical shape, a prismatic shape, a pouch shape, etc.

The pack case 20 may accommodate the battery module 10. The pack case 20 may include an accommodation space. The accommodation space may accommodate the battery module 10. The shape of the pack case 20 may be determined as required for the target to which the battery pack 1 is applied.

The partition wall 30 may be disposed between the battery modules 10. The partition wall 30 may be disposed in the accommodation space of the pack case 20. The partition wall 30 may divide the accommodation space with a side wall 50 which will be described later. The battery module 10 may be disposed in the divided accommodation space.

The refractory member 40 may be disposed on the partition wall 30. The refractory member 40 may be disposed on at least a part of the partition wall 30. Accordingly, the refractory member 40 may prevent or delay the propagation of heat to another battery module 10 adjacent to the battery module 10 when the thermal runaway occurs in the battery module 10.

The refractory member 40 may include a foamable refractory material. Specifically, the refractory member 40 may be formed by coating a foamable refractory paint to the partition wall 30. The foamable refractory material may refer to a material that has a refractory property as such, and is capable of foaming when it reaches a temperature above a predetermined temperature as it is exposed to heat.

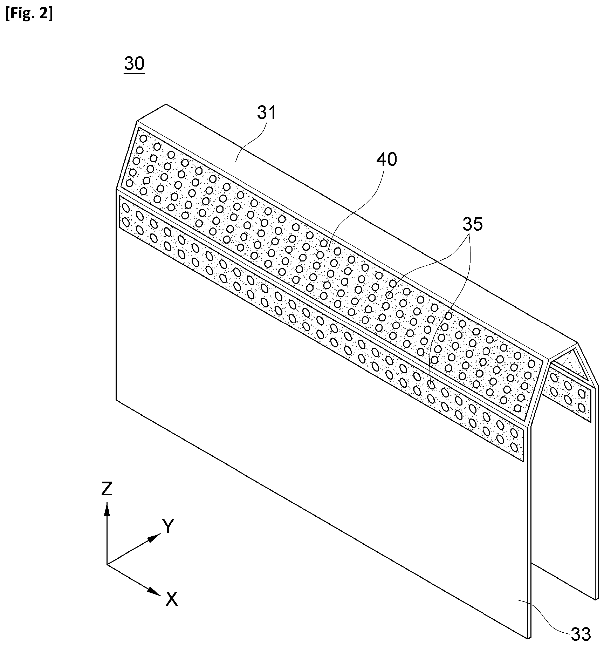

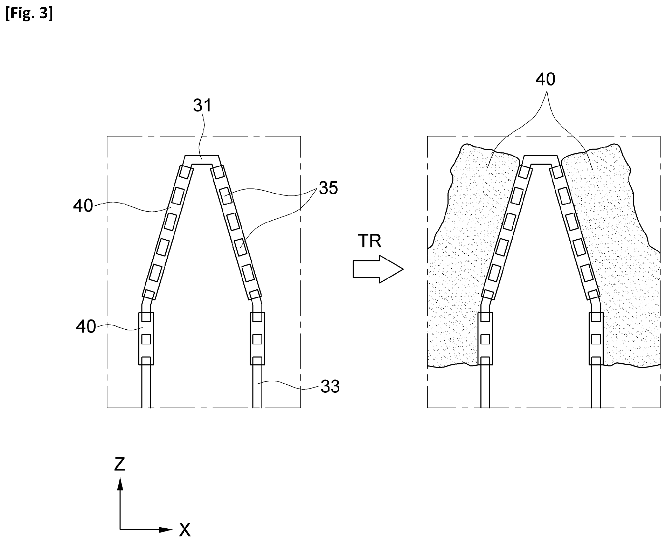

Fig. 2 is a perspective view of a partition wall 30 of an embodiment. Fig. 3 is a side cross-sectional view of a partition wall 30 of an embodiment.

Referring to Fig. 3, the refractory member 40 may be foamed or expanded when exposed to heat to convert it into char to form an insulating layer. The insulating layer may protect the battery module 10 from flame and heat.

Referring to Figs. 2 and 3, the partition wall 30 may include a first wall 31 and a second wall 33. The first wall 31 and the second wall 33 may be connected to each other. The second wall 33 may be disposed between a bottom surface portion 21 of the pack case 20 and the first wall 31.

Referring to Figs. 2 and 3, the refractory member 40 may be disposed around a connection portion of the first wall 31 and the second wall 33. The refractory member 40 may be disposed at an end around the connection portion among one end of the first wall 31. The refractory member 40 may be disposed at an end around the connection portion among one end of the second wall 33.

Referring to Figs. 2 and 3, the first wall 31 may form an upper cover of the partition wall 30. The second wall 33 may form a body of the partition wall 30. The first wall 31 connected to the second wall 33 may cover the body of the partition wall 30 to form an upper cover of the partition wall 30.

Referring to Figs. 2 and 3, the partition wall 30 may include an empty space therein. The empty space may be formed of the first wall 31 and the second wall 33. When the second wall 33 forms the body of the partition wall 30 and the first wall 31 forms the upper cover of the partition wall 30, the empty space may be formed.

Referring to Figs. 2 and 3, the partition wall 30 may include an inclined portion. The first wall 31 may include an inclined portion and a non-inclined portion. The non-inclined portion may have a relatively flat shape. The inclined portion may extend from the non-inclined portion to be connected to the second wall 33. The inclined portion may be inclined toward the battery module 10 between the second wall 33 and the non-inclined portion.

The battery module 10 in which thermal runaway occurs may randomly scatter flame, or the like. Referring to Figs. 2 and 3, the refractory member 40 may be disposed on the inclined portion and the second wall 33. The refractory member 40 may be disposed only on the inclined portion in the first wall 31. The refractory member 40, in the second wall 33, may be disposed only around the connection portion. The refractory member 40 disposed on the inclined portion of the first wall 31 may cover the battery module 10 when the refractory member 40 is foamed. When the refractory member 40 is disposed in the inclined portion, it is possible to more effectively prevent or delay thermal propagation in the battery pack 1.

Referring to Figs. 2 and 3, the partition wall 30 may further include pores 35. The material (e.g., foamable refractory paint) constituting the refractory member 40 may have a prescribed flow. The material constituting the refractory member 40 may be solidified through the pores 35 to form the refractory member 40. The refractory member 40 may be disposed inside and outside the partition wall 30. As a result, structural rigidity may be imparted to the partition wall 30. The pores 35 may be disposed between the partition wall 30 and the refractory member 40. The pores 35 may be disposed at a position of the partition wall 30 in which the refractory member 40 is disposed.

Referring to Figs. 2 and 3, the pores 35 may be disposed around the connecting portions of the first wall 31 and the second wall 33. The pores 35 may be disposed at an end around the connecting portion among one end of the first wall 31. The pores 35 may be disposed at an end around the connecting portion among one end of the second wall 33.

Referring to Figs. 2 and 3, the pores 35 may be disposed on the inclined portion and the second wall 33. In the first wall 31, the pores 35 may be disposed only in the inclined portion. In the second wall 33, the pores 35 may be disposed only around the connecting portion.

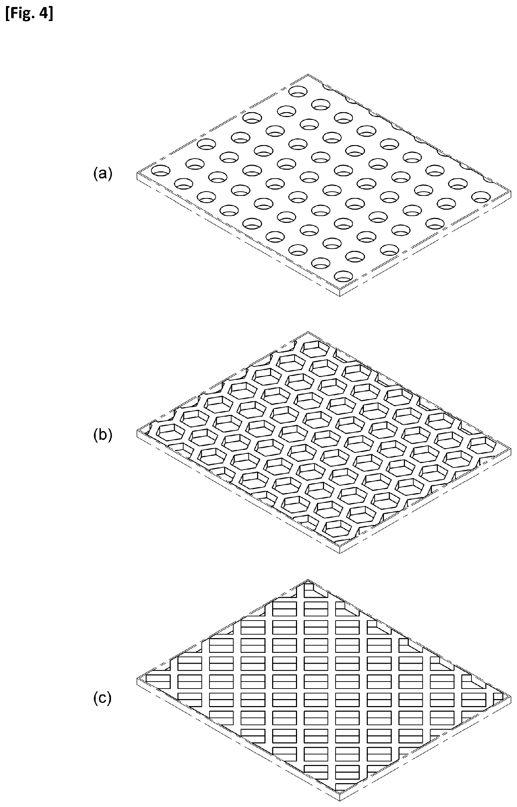

Fig. 4 is a partially enlarged view of a partition wall of an embodiment.

Referring to Fig. 4, the shape of the pores 35 formed in the partition wall 30 may vary. The cross-sectional shape of the pores 35 may include a circle (a), a regular polygon (e.g., a square (c), a regular hexagon (b), or a regular octagon). When the cross-sectional shape of the pores 35 is uniform, the size and the separation distance are maintained constant, the refractory member 40 may be uniformly formed in the partition wall 30.

The direction in which the partition wall 30 is disposed and extended in the battery pack 1 may be determined according to the direction in which heat generated in the battery module 10 is released therefrom. The direction in which heat is released from the battery module 10 may be determined according to the direction in which heat is released from the battery cell 111 included in the battery module 10. The direction in which heat is released from the battery cell 111 may be determined according to the direction in which the electrode leads 1113, 1115 are withdrawn from the battery cell 111.

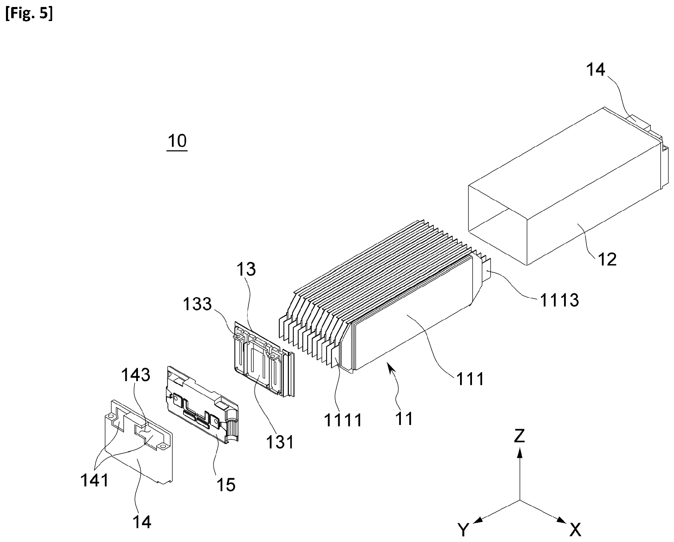

Fig. 5 is an exploded perspective view of a battery module of an embodiment.

Referring to Fig. 5, each of the battery modules 10 may comprise a cell assembly 11 and a module case 12. The module case 12 may accommodate the cell assembly 11. The cell assembly 11 may comprise a plurality of battery cells 111.

Referring to Fig. 5, each of the battery cells 111 may comprise electrode leads 1113, 1115 that are withdrawn in the longitudinal direction (Y-axis direction of Fig. 5). The electrode leads 1113, 1115 may be withdrawn from both sides of the battery cell 111 along the length direction. The polarity of any one of the electrode leads 1113, 1115 may be opposite to the polarity of the other electrode leads 1113, 1115.

Referring to Fig. 5, the battery cell 111 may be arranged in a width direction (X-axis direction of Fig. 5). The battery cell 111 may be arranged so that the polarities of the electrode leads 1113, 1115 disposed at one end in the longitudinal direction along the width direction are all the same or some are the opposite.

The battery cell 111 may be classified into a prismatic shape, a cylindrical shape, a pouch, or a coin shape according to the case shape of the battery cell 111. For example, the battery cell 111 may be a pouch-type battery cell 111.

The electrode leads 1113, 1115 may electrically connect the battery cell 111 to the outside. Flame and heat generated due to the thermal runaway of the battery cell 111 may be easily propagated to an adjacent position through the electrode leads 1113, 1115. Therefore, when the partition wall 30 is disposed between the plurality of battery modules 10 arranged in the longitudinal direction, it is possible to effectively prevent or delay thermal propagation.

Referring to Fig. 5, the module case 12 may be opened in a longitudinal direction. The battery module 10 may further include end plates 14. The end plates 14 may close the module case 12. The module case 12 may be connected with upper and lower surfaces and two side surfaces connecting the upper and lower surfaces to open the front and rear surfaces of the module case 12. The cell assembly 11 may be inserted into this open space. This open portion can be closed with the end plates 14.

Referring to Fig. 5, the battery module 10 may further comprise a busbar assembly 13 between the end plates 14 and the cell assembly 11. The busbar assembly 13 may electrically connect the cell assembly 11 to the outside. The busbar assembly 13 may include a connecting busbar 131 and a terminal busbar 133. The electrode leads 1113, 1115 may be inserted into the connecting busbar 131. The terminal busbar 133 may connect the battery cell 111 to the outside.

The battery module 10 may further include an insulating cover 15 between the end plates 14 and the busbar assembly 13.

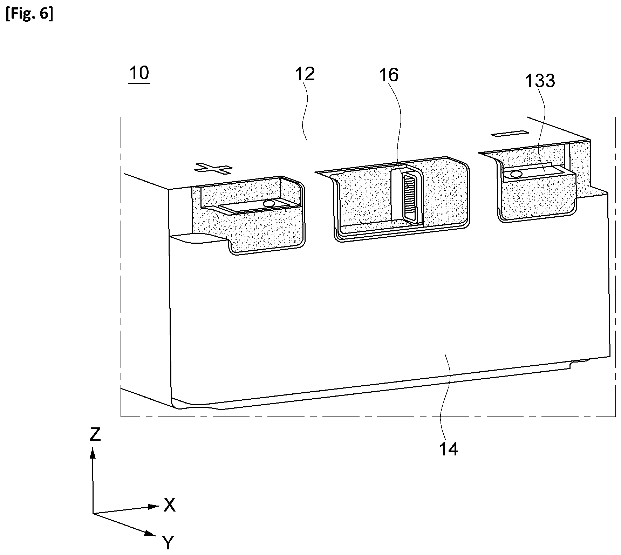

Fig. 6 is a partially enlarged view of a battery module of an embodiment.

Referring to Fig. 6, the end plates 14 may further comprise openings 141, 143. The battery module 10 may further comprise a connector 16. The connector 16 may electrically connect the battery module 10 to the outside. An opening where the terminal busbar 133 is exposed may be the terminal opening 141. An opening where the connector 16 is exposed may be the connector opening 143.

Referring to Fig. 6, the terminal busbar 133, the insulating cover 15, and the connector 16 may be exposed to the outside through the openings 141, 143 of the end plates 14. Heat generated in the battery cell 111 may be released to the outside through the terminal busbar 133 and the connector 16, or the like. That is, the heat due to the thermal runaway generated in the battery cell 111 may be released to the outside through the openings 141, 143 of the end plates 14 opened along the longitudinal direction of the battery module 10.

The openings 141, 143 may be disposed apart from the bottom surface portion 21 of the pack case 20. That is, the openings 141, 143 may be disposed at an upper end of the battery module 10. The terminal busbar 133 and the connector 16 may be exposed to the outside through the openings 141, 143. Therefore, the terminal busbar 133 and the connector 16 may be exposed at the upper end of the battery module 10, which is a position spaced apart from the bottom surface portion 21 of the pack case 20. In other words, heat generated by thermal runaway may be released to the outside through the upper end of the battery module 10.

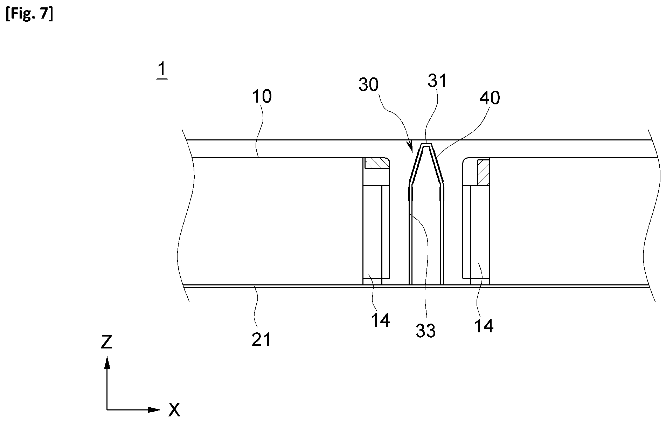

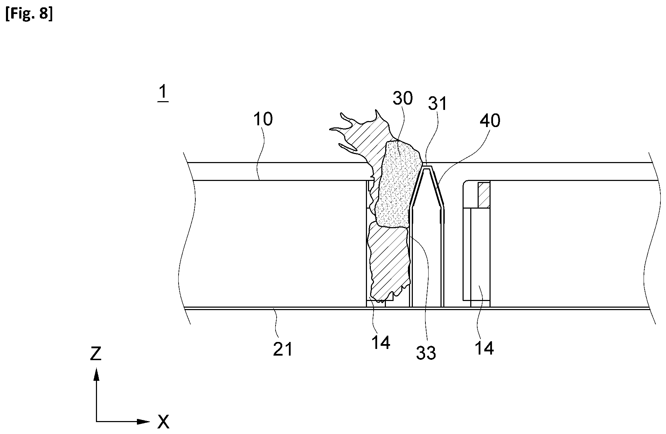

Fig. 7 is a side cross-sectional view of a battery pack of an embodiment. Fig. 8 is a side cross-sectional view of a battery pack of an embodiment. Fig. 7 shows the image before a thermal runaway. Fig. 8 shows the image after a thermal runaway.

Referring to Figs. 7 and 8, the refractory member 40 may be disposed at a position of the partition wall 30 corresponding to the openings 141, 143. Accordingly, it is possible to block or delay the propagation of heat released from the openings 141, 143.

Referring to Figs. 7 and 8, the partition wall 30 may be disposed between the battery modules 10 facing in the longitudinal direction. This is because the heat may be released through the openings 141, 143 of the end plates 14. Specifically, the partition wall 30 may be disposed between one end plate 14 disposed at one end of one battery module 10 and another end plate 14 disposed at the other end of the other battery module 10 disposed adjacent to one end of the battery module 10.

Referring to Figs. 7 and 8, the height of the partition wall 30 may be greater than the height of the battery module 10. When the height of the partition wall 30 is greater than the height of the battery module 10, when the refractory member 40 reacts by heat, the refractory member 40 may sufficiently cover the space between the partition wall 30 and the battery module 10.

Referring to Figs. 7 and 8, the partition wall 30 may be disposed apart from the battery module 10. Specifically, the partition wall 30 may be disposed apart from the end plates 14 by a prescribed distance.

The refractory member 40 may also be disposed at a portion other than the partition wall 30 in the battery module 10.

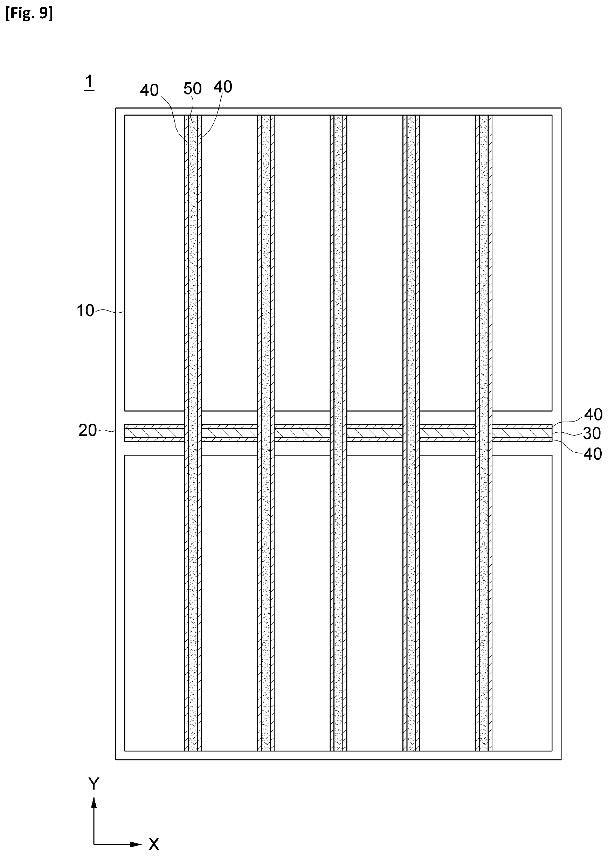

Fig. 9 is a flat cross-sectional view of a battery pack of an embodiment.

Referring to Fig. 9, the battery pack 1 may further include a side wall 50 disposed between the battery modules 10. Here, the partition wall 30 may be disposed between the battery modules 10 disposed in the longitudinal direction. The side wall 50 may be disposed between the battery modules 10 arranged in the width direction. Here, the refractory member 40 may also be disposed on the side wall 50. The heat generated in the battery module 10 may be released in a width direction. Therefore, positioning the refractory member 40 on the side wall 50 may be effective in blocking or delaying thermal propagation in the battery pack 1.

Another embodiment of the present disclosure is a vehicle (v). The vehicle (v) may include, for example, a two-wheeled vehicle such as an electric kickboard, an electric car, and a flight device such as a drone.

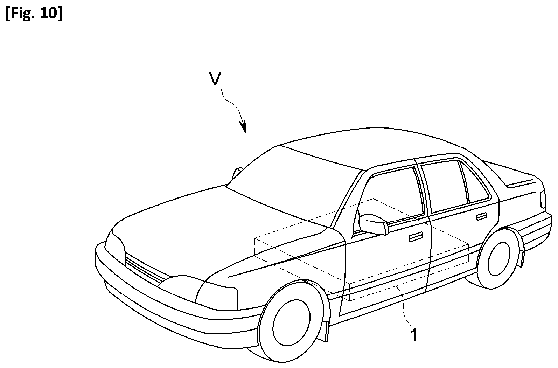

Fig. 10 is a schematic view of a vehicle of an embodiment. Although the electric car is illustrated in Fig. 10, the present disclosure is not limited thereto.

The vehicle (v) of the present disclosure may include the battery pack 1. The electric energy generated by the battery pack 1 may act as the power of the vehicle (v). The vehicle(v) of the present disclosure may comprise a body part and a power supply unit, and the power supply unit may comprise the battery pack 1 of the present disclosure.

Accordingly, the vehicle (v) may improve thermal stability.

## Claims

1. A battery pack comprising:
a plurality of battery modules;
a pack case accommodating the battery modules;
a partition wall disposed between the battery modules; and
a refractory member disposed on the partition wall.

2. The battery pack according to claim 1, wherein the refractory member comprises a foamable refractory material.

3. The battery pack according to claim 1, wherein the partition wall comprises:
a first wall, and
a second wall disposed between a bottom surface portion of the pack case and the first wall.

4. The battery pack according to claim 3, wherein the refractory member is disposed around a connection portion of the first wall and the second wall.

5. The battery pack according to claim 3, wherein the first wall forms an upper cover of the partition wall.

6. The battery pack according to claim 3, wherein the partition wall comprises an empty space formed by the first wall and the second wall.

7. The battery pack according to claim 3, wherein the first wall comprises:
an inclined portion, and
a non-inclined portion, and
the inclined portion is inclined toward the battery module between the second wall and the non-inclined portion.

8. The battery pack according to claim 7, wherein the refractory member is disposed on the inclined portion and the second wall.

9. The battery pack according to claim 1, wherein the partition wall further comprises: pores disposed between the partition wall and the refractory member.

10. The battery pack according to claim 1, wherein each of the battery modules comprises:
a plurality of battery cells arranged in a width direction, and
a module case accomodating the battery cells, and
each of the battery cells comprises electrode leads withdrawn in a length direction.

11. The battery pack according to claim 10, wherein the module case is opened in a length direction, and the battery module further comprises end plates closing the module case.

12. The battery pack according to claim 11, wherein the end plates comprise an opening, and the opening is disposed apart from the bottom surface portion of the pack case.

13. The battery pack according to claim 12, wherein the refractory member is disposed at a position of the partition wall corresponding to the opening.

14. The battery pack according to claim 11, wherein the partition wall is disposed between an end plate disposed at one end of one battery module and an end plate disposed at another end of another battery module disposed adjacent to the one end of the battery module.

15. The battery pack according to claim 1, wherein a height of the partition wall is greater than a height of the battery module.

16. The battery pack according to claim 1, wherein the partition wall is disposed apart from the battery module.

17. The battery pack according to claim 1, further comprising:
a side wall disposed between the battery modules,
wherein the partition wall is disposed between the battery modules disposed in a length direction, and
the side wall is disposed between the battery modules disposed in a width direction.

18. The battery pack according to claim 17, wherein the refractory member is disposed on the partition wall and the side wall.

19. A vehicle comprising:
a body part; and
a power supplying part,
wherein the power supplying part comprises a battery pack, and
the battery pack comprises:
a plurality of battery modules;
a pack case accommodating the battery modules;
a partition wall disposed between the battery modules; and
a refractory member disposed on the partition wall.
